# EUROPÄISCHE PATENTSCHRIFT

(11) **EP 0 710 790 B1**
(45) Veröffentlichungstag und Bekanntmachung des Hinweises auf die Patenterteilung: **08.05.2002**
(21) Anmeldenummer: 95116925.9
(22) Anmeldetag: 27.10.1995
(51) Int. Cl.: F16K 31/08

(54) **Magnetventil und dessen Verwendung**
Solenoid valve and its usage
Electrovanne et son utilisation

(30) Priorität: 05.11.1994 DE 4439695
(43) Veröffentlichungstag der Anmeldung: 08.05.1996
(73) Patentinhaber: Gustav Wahler GmbH u. Co.KG, 73730 Esslingen (DE)
(72) Erfinder: Oesterle, Hans-Peter, D-78609 Tuningen (DE); Schäfer, Heins, D-78048 Villingen-Schwenningen (DE); Blaffert, Wolfgang, D-78628 Rottweil (DE); Zimmermann, Frank, D-73730 Esslingen (DE)
(74) Vertreter: Kratzsch, Volkhard, Dipl.-Ing.

(56) Entgegenhaltungen:
- EP-A- 0 340 625
- CH-A- 37 507
- CH-A- 352 209
- DE-B- 1 004 876
- DE-B- 1 806 094
- DE-B- 2 261 449
- DE-C- 976 704
- DE-U- 1 926 042
- DE-U- 9 107 436
- DE-U- 9 317 864
- US-A- 3 635 438
- US-A- 3 951 378
- PATENT ABSTRACTS OF JAPAN vol. 7 no. 165 (M-230) [1310] ,20.Juli 1983 & JP-A-58 072784 (MATSUSHITA)

## Beschreibung

Die Erfindung betrifft ein monostabiles Proportional-Magnetventil nach den Merkmalen des Oberbegriffs des Anspruchs 1 und die Verwendung eines solchen monostabilen Proportional-Magnetventils.

Solche Proportional-Magnetventile sind beispielsweise aus CH-A-352209 oder DE-U-1926042 bekannt. Proportional-Magnetventile zeichnen sich dadurch aus, daß abhängig von der magnetischen Erregung der Erregerspule der Querschnitt einer zu verschließenden Bohrung verengt werden kann. Solche Proportional-Magnetventile haben den Vorteil, daß zwischen der Stromsstärke, die der Erregerspule zugeführt wird und der hierdurch bedingten Ventilöffnung ein linearer Zusammenhang besteht.

Es besteht das Erfordernis, insbesondere in der Automobilindustrie, daß im Ruhezustand des Ventils eine vom Ventil abdichtbare Öffnung mit einer vorgegebenen Zudrückkraft geschlossen wird und trotzdem mit verhältnismäßig geringer Stromstärke der Ventilsitz proportional geöffnet werden kann. Dieses Problem stellt sich insbesondere in bei Brennkraftmaschinen im Zusammenhang mit der Abgasrückführung, welche von den Automobilherstellern bei der Entwicklung von umweltbewußten Neufahrzeugen immer mehr zum Einsatz kommt.

Der vorliegenden Erfindung liegt die Aufgabe zugrunde, das eingangs genannte Proportional-Magnetventil so weit auszubilden, dass es einfach herzustellen ist und im Ruhestand seinen Ventilsitz sicher mit einer vorgegebenen Kraft verschließt und trotz dieser vorgegebenen Zudrückkraft im Betrieb zuverlässig und schnell öffnet.

Diese Aufgabe wird durch ein monostabiles Proportional-Magnetventil mit den Merkmalen des Anspruchs 1 gelöst.

Weiterbildungen der Erfindung sind Gegenstand der Unteransprüche.

Verwendungen solcher monostabiler Proportional-Magnetventile sind Gegenstand der Ansprüche 13 und 14.

Die Erfindung beruht darauf, das Proportional-Magnetventil mit einer Einrichtung zu versehen, welche das Dichtelement des Proportional-Magnetventils in Hubanfangsstellung des Ankerkolbens mit einer vorgegebenen Kraft gegen den Ventilsitz drückt. Die Einrichtung weist hierfür eine den Ankerkolben umgebende zweite, unabhängig von der Erregerspule bestrombare Spule auf, die bei einer vorgegebenen Bestromungsänderung die gegen den Ventilsitz drückende Kraft des Dichtelementes aufhebt.

Der wesentliche Vorteil eines solchen Systems liegt in einer hohen Zudrückkraft in Hubanfangsstellung sowie einer verhältnismäßig geringen Bestromung des Proportional-Magneten zur Steuerung des Ventilhubes.

Die zweite Spule, welche ausschließlich zur Neutralisation der Zudrückkraft in Hubanfangsstellung dient, kann dabei separat angesteuert werden, was drei elektrische Zuleitungen erforderlich macht. Sie kann aber auch in Reihe mit der Erregerspule liegen, wobei der Strom der zweiten Spule über ein entsprechendes elektrisches Bauelement beim Abrißstrom, also dem benötigten Strom für die volle Neutralisation des Permanentmagneten, begrenzt wird. Hierbei sind zwei elektrische Zuleitungen erforderlich.

Erfindungsgemäß ist innerhalb des Gehäuses des Proportional-Magnetventils ein auf den Ankerkolben wirkender Permanentmagnet vorgesehen, durch welchen das Dichtelement bei stromlosem Zustand der Erregerspule und der zweiten Spule gegen den Ventilsitz gedrückt wird. Der Permanentmagnet wird erfindungsgemäß ringförmig bzw. koaxial von der zweiten Spule umgeben, wodurch die Wirkung des Permanentmagneten bei Bestromung der zweiten Spule mit einer vorgegebenen Stromstärke neutralisierbar ist. Dies hat den Vorteil, daß auch bei Nichtbestromung der Erregerspule bzw. der zweiten Spule das Dichtelement gegen den Ventilsitz mit der durch den Permanentmagneten bereitgestellten Kraft gedrückt wird. Diese Lösung stellt daher sicher, daß der Ventilsitz auch bei Stromausfall sicher verschlossen ist.

Der Permanentmagnet kann derart innerhalb des Gehäuses des Proportional-Magnetventils angeordnet sein, daß der Ankerkolben bei unbestromter Erregerspule und unbestromter zweiter Spule aus dem Gehäuse des Proportional-Magnetventils herausgedrückt wird. Ein solches Proportional-Magnetventil ist zum drückenden Verschließen von Ventilsitzen geeignet. Der Permanentmagnet kann hierbei beispielsweise ein feststehender Ringmagnet sein, durch dessen Öffnung der dem Dichtelement zugewandte Ankerstößel axial beweglich ist. Der Ringmagnet wirkt hierbei auf die dem Dichtelement zugewandte Stirnseite des Ankerkolbens und zieht diesen an.

Der Permanentmagnet kann innerhalb des Gehäuses des Proportional-Magnetventils auch so angeordnet werden, daß der Ventilsitz durch eine ziehende Kraft verschlossen wird. Hierfür ist der Permanentmagnet beispielsweise ein innerhalb des Gehäuses des Proportional-Magnetventils feststehender scheiben- oder plattenförmiger Permanentmagnet, welcher auf der dem Dichtelement abgewandten Seite des Ankerkolbens sitzt. Die Dimensionierung dieses Permanentmagneten ist hierbei so zu wählen, daß der Ankerkolben vom Permanentmagneten mit einer vorgegebenen Kraft angezogen wird.

Zum Neutralisieren der Magnetkraft dieser Permanentmagneten wird die zweite Spule vorzugsweise koaxial zum Permanentmagneten angeordnet. Hierdurch baut sich bei Bestromung der zweiten Spule ein Magnetfeld auf, das, eine entsprechende Stromstärke vorausgesetzt, eine gleichmäßig gute Neutralisierung des Permanentmagneten ermöglicht. Zu beachten ist selbstverständlich, daß der Wicklungssinn dieser zweiten Spule bzw. die Polarität des durch diese zweite Spule fließenden Stromes so eingestellt ist, daß die Neutralisierungswirkung auch möglich ist, also die Magnetfelder zueinander entgegengesetzt verlaufen.

Bei einer Spulenansteuerung mit zwei Zuleitungen wird die Federvorspannung vorzugsweise so ausgelegt, daß sie bei Erreichung des Abrißstromes, also bei voller Neutralisation des Permanentmagneten, der Kraft des Proportional-Magneten entspricht. Durch diese Dimensionierung können Anfahrsprünge des Ankerkolbens und damit ruckartige Bewegungen des Ankerstößels bei Hubanfang vermieden werden. Vorzugsweise wird die zweite Spule so dimensioniert, daß der Abrißstrom in etwa die Größe hat, bei welcher die Magnetkraft bei Hubanfang in den linearen Bereich übergeht.

Eine Weiterbildung der Erfindung sieht vor, daß das Proportional Magnetventil auf einer Außenwandung eines T-förmigen Rohrabschnittes aufsitzt, welches einen ersten Rohrkanal und einen senkrecht in diesen ersten Rohrkanal führenden zweiten Rohrkanal aufweist. Das Dichtelement des Proportional-Magnetventiles sitzt hierbei an dem am Übergang zwischen beiden Rohrkanälen angeordneten Ventilsitz auf. Aus Gründen einer einfachen Montage wird das Proportional-Magnetventil vorteilhafterweise auf einen Flansch der Außenwandung des T-förmigen Rohrabschnittes aufgesetzt. Dieser Rohrabschnitt kann zusammen mit dem aufgesetzten Magnetventil eine bauliche Einheit bilden, um dann als komplettes Ventil, das beispielsweise in der Automobiltechnik eingesetzt wird, vertrieben werden zu können.

Eine andere Weiterbildung der Erfindung sieht eine Druckentlastung vor, um die Betätigungskräfte des Proportional-Magnetventiles möglichst gering zu halten und um Anfahrsprünge zu vermeiden. Hierfür ist das Proportional-Magnetventil auf seiner dem Dichtelement zugewandten Stirnseite mit einer Membran versehen. Zwischen der Membran und dem gegenüberliegenden stirnseitigen Deckelteil des Proportional-Magnetventiles befindet sich ein Zwischenraum, der über eine Bohrung, die sich innerhalb des Ankerstößels befindet und mit einer Öffnung an der Ankerstößelspitze in Verbindung steht.

Zur einfacheren Montage des Proportional-Magnetventiles am T-förmigen Rohrteil kann das Dichtelement lösbar am Ankerstößel angeordnet sein. Darüber hinaus ist es auch möglich, den Ankerstößel zweiteilig auszubilden.

Das Proportionalventil nach der Erfindung wird vorzugsweise für Brennkraftmaschinen in der Automobiltechnik zum Verschließen von Durchflußöffnungen eingesetzt. Das Proportional-Magnetventil läßt sich insbesondere zur Steuerung der Abgasrückführung von Brennkraftmaschinen, insbesondere von Kraftfahrzeugen, in Automobilen verwenden. Das Dichtelement sitzt hierbei auf oder innerhalb eines Rohrkanales, welcher das beim Motorlauf entstehende Abgas führt. Dieser Rohrkanal mündet in einen Frischluftkanal, über den dem Verbrennungsraum des Motors der für die Verbrennung notwendige Sauerstoff zugeführt wird. Das Proportional-Magnetventil steuert durch dessen Öffnen und Schließen die Abgasrückführung in den Verbrennungsraum und trägt dabei wirksam zum Umweltschutz bei.

Das Proportional-Magnetventil nach der Erfindung wird nachfolgend anhand von zwei Ausführungsbeispielen im Zusammenhang mit Figuren näher erläutert. Es zeigen :
- Figur 1: ein erstes Ausführungsbeispiel eines Proportional-Magnetventils nach der Erfindung mit "drückendem" Ankerstößel in Hubanfangsstellung des Ankerkolbens und
- Figur 2: ein zweites Ausführungsbeispiel eines Proportional-Magnetventiles nach der Erfindung mit "ziehendem" Ankerstößel in Hubanfangsstellung des Ankerkolbens.

In den beiden folgenden Figuren bezeichnen, sofern nicht anders angegeben, gleiche Bezugszeichen gleiche Teile mit gleicher Bedeutung. Obwohl jeweils nur von Magnetventil gesprochen wird, ist hiermit stets ein Proportional-Magnetventil gemeint.

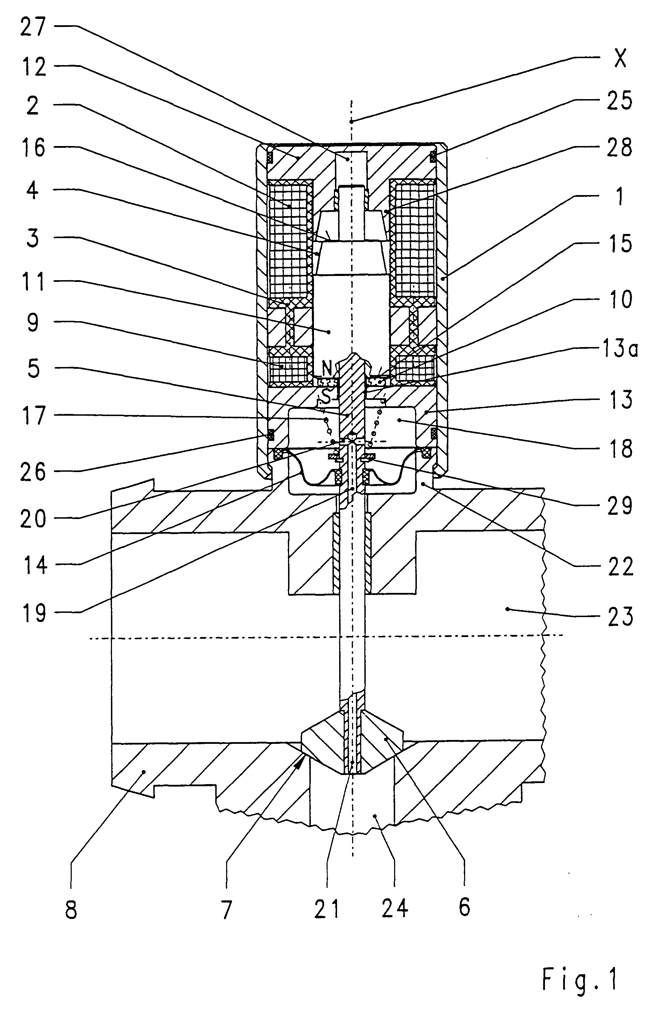

Das in Figur 1 dargestellte Ausführungsbeispiel eines Magnetventiles weist ein zylinderförmiges Gehäuse 1 auf, das im wesentlichen aus einem Rohrstück besteht, welches beidseitig mit einem Deckelteil 12 und 13 abgeschlossen ist. Zwischen den jeweiligen Deckelteilen 12, 13 und dem Rohrstück sind jeweils Dichtungsringe 25, 26 angeordnet. Im Inneren des Gehäuses 1 des Magnetventiles ist eine Erregerspule 2 auf einen Spulenkörper 3 gewickelt. Im Ankerraum 4 des Spulenkörpers 3 ist ein entlang einer Mittenachse X axial verschiebbarer Ankerkolben 11 angeordnet. Der Ankerkolben 11 ist mit einem Ankerstößel 5 feststehend verbunden. Der Ankerstößel 5 ragt durch eine Durchgangsöffnung 13a des Deckelteiles 13 und ist an seinem vorderen Ende mit einem Dichtelement 6 zum Abdichten eines Ventilsitzes 7 verbunden.

Der in Figur 1 dargestellte Ankerkolben 11 befindet sich in Hubanfangsstellung, d.h. in dieser Stellung des Ankerkolbens 11 ist die Erregerspule 2 nicht von Strom durchflossen. Nach Bestromung der beiden Spulen bewegt sich der Ankerkolben 11 in Richtung auf das obere Deckelteil 12. Aus Gründen einer guten Führung ist das obere Deckelteil 12, das zugleich den Polkern bildet, mit einer Bohrung 27 versehen, in welcher der Ankerstößel 5 mit einem auf der dem Dichtelement 6 abgewandten Stirnseite 16 des Ankerkolbens 11 vorstehenden Abschnitt gleiten kann.

Das obere Deckelteil 12, also der Polkern, weist darüber hinaus einen sogenannten Steuerkonus 28 auf, wie er zur Anpassung der Hubkraftcharakteristik eines Elektromagneten aus der DE-PS 976 704 bekannt ist.

Im nicht bestromten Zustand der Erregerspule 2 sitzt das Dichtelement 6 gerade auf dem Ventilsitz 7 auf. Der Ventilsitz 7 ist Bestandteil eines Ventilteiles 8 und in der Darstellung von Figur 1 innerhalb eines T-förmigen Rohrabschnittes angeordnet. Das Ventilteil 8 verfügt über einen ersten Rohrkanal 23 und einen senkrecht in diesen Rohrkanal 23 führenden zweiten Rohrkanal 24. Der Übergang des zweiten Rohrkanales 24 zum ersten Rohrkanal 23 ist konusförmig aufgeweitet. In dieser konusförmigen Aufweitung, die den Ventilsitz 7 bildet, liegt das Dichtelement 6 an, um den zweiten Rohrkanal 24 abzudichten.

Um den zweiten Rohrkanal 24 in Hubanfangsstellung sicher abzudichten, drückt bei dem in Figur 1 dargestellten Magnetventil das Dichtelement 6 mit einer vorgegebenen Kraft gegen den Ventilsitz 7. Die vorgegebene Kraft kann mehrere Newton betragen und wird im Ausführungsbeispiel von Figur 1 durch einen ringförmigen Permanentmagneten 10 bereitgestellt. Der Permanentmagnet 10 ist auf der der unteren Stirnseite 15 zugeordneten Seite des Ankerkolbens 11 angeordnet. Der Permanentmagnet 10 ist darüber hinaus von einer zweiten Spule 9 koaxial umgeben. Diese zweite Spule 9 kann dabei wahlweise separat oder in Reihe mit der Erregerspule 2 angesteuert werden. Zweckmäßigerweise wird die Erregerspule 2 und die zweite Spule 9 jedoch vom gleichen Strom durchflossen, was weiter unten noch näher erläutert wird.

Im Ausführungsbeispiel von Figur 1 sind die Erregerspule 2 und die zweite Spule 9 axial im Abstand zueinander angeordnet. Die Erregerspule 2 und die zweite Spule 9 können auf einem gemeinsamen Spulenkörper 3 axial nebeneinander aufgewickelt sein, wie es in Figur 1 dargestellt ist.

Das Magnetventil 1 weist darüber hinaus eine Druckfeder 17 auf, die sich einerseits an der Außenwandung des unteren Deckelteiles 13 und andererseits an einem mit dem Ankerstößel 5 fest verbundenen Ring 29 abstützt. Diese Druckfeder dient hauptsächlich zur Hubsteuerung. Bei Spulenansteuerung mit zwei Zuleitungen verhindert die gewählte Federvorspann kraft ferner Anfahrsprünge.

Darüber hinaus ist auf der dem Anker 11 gegenüberliegenden Seite des unteren Deckelteiles 13 eine Membran 14 so eingespannt, daß zwischen dem Deckelteil 13 und der Membran 14 ein Zwischenraum 18 gebildet ist. In diesem Zwischenraum 18 sitzt die Druckfeder 17, die hier als Spiralfeder ausgebildet ist. Der Ankerstößel 5 ist im Bereich dieses Zwischenraumes 18 mit einer Öffnung 20 versehen, welche über eine Durchgangsbohrung 19, die als Druckausgleichskanal wirkt, mit einer Öffnung 21 an der Stirnseite des Ankerstößels 5 verbunden ist. Die Membran 14 sitzt in einem Flansch 22 des Ventilteiles 8. Die rohrförmige Gehäusewandung des Gehäuses 1 ist auf diesen Flansch 22 aufgesetzt.

Aufgrund des Permanentmagneten 10 und dessen Magnetfeldorientierung wird der Ankerkolben 11 samt Ankerstößel 5 und Dichtelement 6 mit einer vorgegebenen Kraft auf den Ventilsitz 7 gedrückt. Bei Bestromung der zweiten Spule 9 wird diese Zudrückkraft mit zunehmender Stromstärke neutralisiert, sofern der Wicklungssinn der zweiten Spule 9 entsprechend gewählt wird. Bei Erreichen des sogenannten Abrißstromes wird die magnetische Haltekraft des Permanentmagneten 10 gerade neutralisiert. Ab jetzt erfolgt die Hubstellung proportional zur Bestromung der Erregerspule 2.

Das in Figur 1 dargestellte Proportionalventil ist zum Verschließen von Durchlaßöffnungen und insbesondere zur Steuerung der Abgasrückführung bei Brennkraftmaschinen in Kraftfahrzeugen einsetzbar. Der in Figur 1 dargestellte zweite Rohrkanal 24 entspricht in diesem Fall einem Abgaszuführungskanal und der erste Rohrkanal 23 einem Frischluftkanal.

Aus Gründen einer einfacheren Montage kann das Dichtelement 6 auf den Ankerstößel 5 aufgeschraubt, aufgesteckt oder in sonstiger lösbarer Weise befestigt werden. Der Ankerstößel 5 selbst kann darüber hinaus zweiteilig ausgestaltet sein, indem das aus dem Gehäuse 1 herausragende Ankerstößelteil auf das innerhalb des Ventilteiles 8 angeordnete Ankerstösselteil aufsteckbar, aufschraubbar oder dergleichen ist.

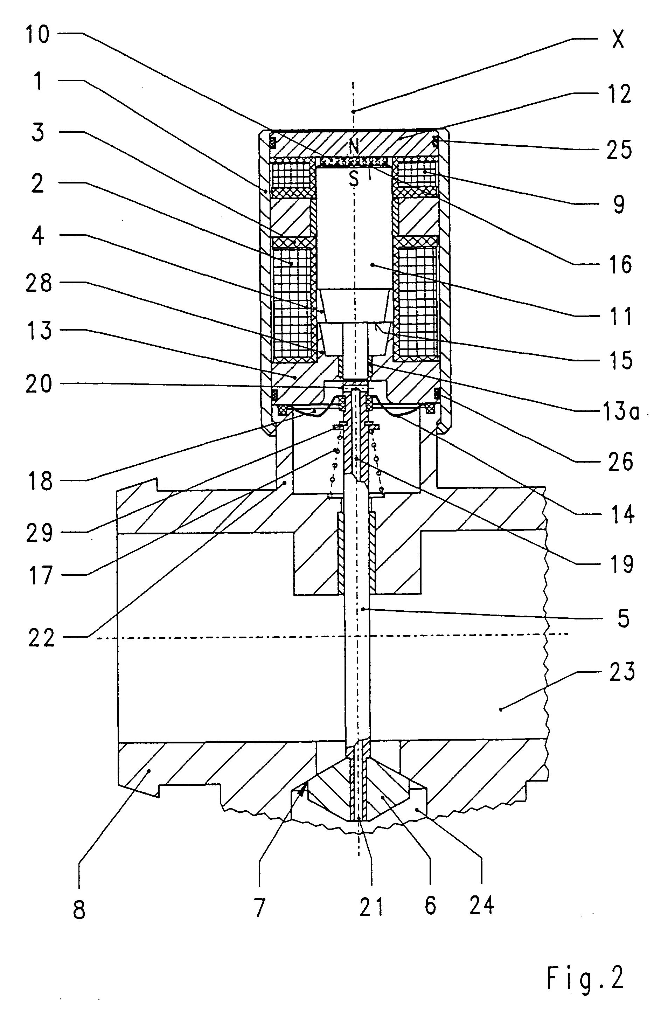

In Figur 2 ist ein zweites Ausführungsbeispiel eines Magnetventiles nach der Erfindung dargestellt. Im Unterschied zum Magnetventil gemäß Figur 1 handelt es sich hier nicht um ein "drückendes" Ventil, bei dem der Ankerstößel 5 mit seinem am vorderen Ende sitzenden Dichtelement 6 gegen den Ventilsitz 7 gedrückt wird, sondern um ein "ziehendes" Ventil. Unter "ziehendem" Ventil ist hier zu verstehen, daß der Ankerstößel 5 mit seinem am vorderen Ende sitzenden Dichtelement in Richtung auf das Magnetventilgehäuse 1 gezogen werden muß, um den Ventilsitz 7 zu schließen. Hierfür sitzt, wie Figur 2 zeigt, das Dichtelement 6 vollständig im zweiten Rohrkanal 24, der sich im Mündungsbereich zum ersten Rohrkanal 23 verengt. Das Dichtelement 6 sitzt im noch nicht verengten Teil des zweiten Rohrkanales und weist einen größeren Außendurchmesser als der verengte Bereich dieses zweiten Rohrkanales 24 auf. Das Dichtelement 6 ist vorzugsweise zentrisch im zweiten Rohrkanal 24 angeordnet. Die Außenkontur des Dichtelementes 6 und des zweiten Rohrkanales 24 sind so aufeinander abgestimmt, daß beim Anliegen des Dichtelementes 6 an der Verengung des zweiten Rohrkanales 24 eine gute Dichtwirkung erreicht wird.

Um ein sicheres Abdichten zu gewährleisten, wird das Dichtelement 6 mit einer vorgegebenen Kraft gegen den Ventilsitz 7 gedrückt. Hierfür zieht das auf dem Flansch 22 mit seinem Gehäuse 1 sitzende Magnetventil den Ankerstößel 5 mit einer vorgegebenen Kraft nach oben. Diese vorgegebene Kraft wird durch einen Permanentmagneten, der jetzt als platten- bzw. scheibenförmiger Permanentmagnet 10 ausgebildet ist, bereitgestellt. Dieser Permanentmagnet 10 sitzt gegenüber der dem Dichtelement 6 abgewandten Stirnseite 16 des Ankerkolbens 11.

Im Gegensatz zum Ausführungsbeispiel von Figur 1 befindet sich die zweite Spule 9 jetzt zwischen oberem Deckelteil 12 und Erregerspule 2. Die zweite Spule 9 ist wiederum koaxial um den Permanentmagneten 10 herum angeordnet, um dessen Wirkung bei Bestromung der zweiten Spule 9 bei entsprechender Stromstärke neutralisieren zu können.

Ein weiterer Unterschied zum Magnetventil gemäß Figur 1 besteht in der Anordnung der Druckfeder 17. Diese als Spiralfeder ausgebildete Druckfeder 17 stützt sich jetzt einerseits an der Außenwandung des Ventilteiles 8 und andererseits an dem mit dem Ankerstößel 5 verbundenen Ring 29 ab. Die Druckfeder 17 liegt darüber hinaus in dem Zwischenraum, der durch den Flansch 22 des Ventilteiles 8 und die Membran 14 gebildet ist.

Wie das Magnetventil von Figur 2 weiter zeigt, ist der zwischen dem unteren Deckelteil 13 und der Membran 14 liegende Zwischenraum 18 wieder mit dem zweiten Rohrkanal 24 über einen Druckausgleichskanal, der innerhalb des Stößels 5 angeordnet ist, verbunden. Der Druckausgleichskanal wird durch die Durchgangsbohrung 19 und ihre im Zwischenraum 18 liegende Öffnung 20 und die an der Spitze des Ankerstößels 5 liegende Öffnung 21 gebildet.

Wie aus Figur 2 weiter ersichtlich, ist der Ankerkolben 11 jetzt an seiner dem Dichtelement 6 zugewandten Stirnseite 15 konisch verjüngt ausgebildet. Dies ist deshalb erforderlich, da das untere Deckelteil 13, das den Polkern bildet, eine hohlzylinderförmige, konusförmig erweiterte Wandung aufweist, die sich etwas in die Durchgangsöffnung des Spulenkörpers 3 hinein erstreckt. Diese hohlzylinderförmige Wandung des unteren Deckelteiles 13 bildet den an sich bekannten Steuerkonus 28.

Der Ankerkolben 11 befindet sich bei dem in Figur 2 dargestellten Magnetventil in seiner Hubanfangsstellung, d.h. die Erregerspule 2 und die zweite Spule 9 sind nicht von Strom durchflossen. Der Permanentmagnet 10 zieht den Ankerkolben 11 mit einer vorgegebenen Kraft nach oben, wodurch das mit dem Ankerkolben 11 über den Ankerstößel 5 verbundene Dichtelement 6 gegen den Ventilsitz 7 gedrückt wird. Zum Öffnen des Ventilsitzes 7 und damit zum Herunterschieben des Ankerstößels 5 in Richtung auf den zweiten Rohrkanal 24 wird die zweite Spule 9 von einem Strom durchflossen, der die Magnetkraft des Permanentmagneten 10 neutralisiert. Ist dies geschehen, kann durch Bestromung der Erregerspule 2 der Ankerkolben 11 nach Maßgabe der Stromstärke des durch die Erregerspule fließenden Stromes fein dosiert bewegt werden.

Die in Figur 1 und 2 gezeigten Ausführungsbeispiele von Magnetventilen zeichnen sich auch bei Stromausfall durch ein sicheres Verschließen des Ventilsitzes 7 aus. Aufgrund der Federkraft sowie der Magnetkraft des Permanentmagneten 10 wird nämlich jeweils der Ankerkolben 11 so bewegt, daß das Dichtelement 6 gegen den Ventilsitz 7 drückt.

### BEZUGSZEICHENLISTE

- 1: Gehäuse
- 2: Erregerspule
- 3: Spulenkörper
- 4: Ankerraum
- 5: Ankerstößel
- 6: Dichtelement
- 7: Ventilsitz
- 8: Ventilteil
- 9: zweite Spule

- 10: Permanentmagnet
- 11: Ankerkolben
- 12: Deckelteil
- 13: Deckelteil
- 13a: Durchgangsöffnung
- 14: Membran
- 15: Stirnseite
- 16: Stirnseite
- 17: Druckfeder
- 18: Zwischenraum
- 19: Durchgangsbohrung

- 20: Öffnung
- 21: Öffnung
- 22: Flansch
- 23: erster Rohrkanal
- 24: zweiter Rohrkanal
- 25: Dichtungsring
- 26: Dichtungsring
- 27: Bohrung
- 28: Steuerkonus
- 29: Ring

- X: Mittenachse

## Patentansprüche

1. Monostabiles Proportional-Magnetventil mit einem Gehäuse (1), in welchem eine Erregerspule (2) auf einem Spulenkörper (3) gewickelt und in einem Ankerraum (4) des Spulenkörpers (3) ein bei Bestromung der Erregerspule (2) entlang einer Mittenachse (X) axial gegen die Wirkung einer Druckfeder verschiebbarer Ankerkolben (11) angeordnet ist, durch welchen ein an der Stirnseite des Ankerkolbens (11) angeordnetes Dichtelement (6) in einem Ventilsitz eines Ventilteiles (8) drückbar ist, wobei die Hubstrecke des Ankerkolbens (11) in linearer Abhängigkeit zur Bestromungsstärke der Erregerspule (2) steht, **gekennzeichnet durch** folgende Merkmale:
- einen einzigen Permanentmagneten (10), um das Dichtelement (6) in Hubanfangsstellung des Ankerkolbens (11) mit einer vorgegebenen Kraft gegen den Ventilsitz zu drücken,
- eine den Ankerkolben (11) umgebende zweite Spule (9) zur Neutralisierung der Wirkung des Permanentmagneten (10) für die Dauer der Bestromung der Erregerspule (2) **durch** Bestromung der zweiten Spule (9) für diese Dauer.

2. Monostabiles Proportional-Magnetventil nach Anspruch 1, **dadurch gekennzeichnet, daß** der Permanentmagnet (10) ringförmig von der zweiten Spule (9) umgeben ist.

3. Monostabiles Proportional-Magnetventil nach Anspruch 1 oder 2, **dadurch gekennzeichnet, daß** der Permanentmagnet (10) ein feststehender Ringmagnet ist, daß innerhalb der Öffnung des Ringmagneten der Ankerkolben (11) axial beweglich ist und daß der Ringmagnet auf der dem Dichtelement (6) zugewandten Stirnseite (15) des Ankerkolbens (11) angeordnet ist.

4. Monostabiles Proportional-Magnetventil nach Anspruch 3, **dadurch gekennzeichnet, daß** der Permanentmagnet (10) ein innerhalb des Gehäuses (1) des Magnetventils feststehender, scheiben- oder plattenförmiger und auf der dem Dichtelement (6) abgewandten Stirnseite (16) des Ankerkolbens (11) angeordneter Permanentmagnet (10) ist.

5. Monostabiles Proportional-Magnetventil nach einem der Ansprüche 2 bis 4, **dadurch gekennzeichnet, daß** die zweite Spule (9) koaxial zum Permanentmagneten (10) angeordnet ist.

6. Monostabiles Proportional-Magnetventil nach einem der Ansprüche 1 bis 5, **dadurch gekennzeichnet, daß** die Druckfeder (17) eine den Ankerkolben (11) teilweise koaxial umgebende Spiralfeder ist, welche sich einerseits an einer mit dem Ankerkolben (11) verbundenen Stützfläche und andererseits an einem stirnseitigen Deckelteil (13) des Magnetventils oder an einer diesem Deckelteil (13) gegenüberliegenden Stützfläche des Ventilteils (8) abstützt.

7. Monostabiles Proportional-Magnetventil nach einem der Ansprüche 1 bis 6, **dadurch gekennzeichnet, daß** das Magnetventil auf der Außenwandung eines T-förmigen Rohrabschnittes aufsitzt, welches einen ersten Rohrkanal (23) mündenden zweiten Rohrkanal (24) aufweist, und daß das Dichtelement (6) auf dem am Übergang zwischen beiden Rohrkanälen (23, 24) angeordneten Ventilsitz (7) aufsitzt.

8. Monostabiles Proportional-Magnetventil nach Anspruch 7, **dadurch gekennzeichnet, daß** der T-förmige Rohrabschnitt mit einem Flansch (22), auf welchem das Magnetventil aufsitzt, versehen ist.

9. Monostabiles Proportional-Magnetventil nach einem der Ansprüche 1 bis 8, **dadurch gekennzeichnet, daß** auf der dem Ankerkolben (11) gegenüberliegenden Seite des Deckelteils (13) eine Membran (14) unter Bildung eines Zwischenraumes (18) zwischen Membran (14) und Deckelteil (13) vorgesehen ist, und daß dieser Zwischenraum (18) über eine Durchgangsbohrung (19) innerhalb des Ankerkolbens (11) mit einer vorderen Öffnung (21) des Ankerkolbens (11) in Verbindung steht.

10. Monostabiles Proportional-Magnetventil nach einem der Ansprüche 1 bis 9, **dadurch gekennzeichnet, daß** das Magnetventil und der T-förmige Rohrabschnitt eine bauliche Einheit bilden.

11. Monostabiles Proportional-Magnetventil nach einem der Ansprüche 1 bis 10, **dadurch gekennzeichnet, daß** der Ankerkolben (11) zweiteilig ausgebildet ist.

12. Monostabiles Proportional-Magnetventil nach einem der Ansprüche 1 bis 11, **dadurch gekennzeichnet, daß** das Dichtelement (6) lösbar am Ankerkolben (11) angeordnet ist.

13. Verwendung des Magnetventils nach einem der Ansprüche 1 bis 12 als Proportionalventil zum Verschließen von Durchgangsöffnungen.

14. Verwendung nach Anspruch 13 als Magnetventil zur Steuerung der Abgasrückführung bei Brennkraftmaschinen insbesondere von Kraftfahrzeugen.

## Claims

1. Monostable proportional solenoid valve with a housing (1) in which a field coil (2) is wound on a coil former (3) and an armature plunger (11) which is displaceable axially against the action of a compression spring along a centre line (X) when the field coil (2) is exposed to current is arranged in an armature chamber (4) of the coil former (3), by means of which armature plunger (11) a sealing element (6) arranged on the end face of the armature plunger (11) can be pressed in a valve seat of a valve member (8), wherein the stroke length of the armature plunger (11) is in a linear relationship with the strength of exposure to current of the field coil (2), **characterised by** the following features:
- a single permanent magnet (10) to press the sealing element (6) against the valve seat with a predetermined force at the start of the stroke of the armature plunger (11),
- a second coil (9) surrounding the armature plunger (11) to neutralise the effect of the permanent magnet (10) for the duration of current exposure of the field coil (2) by exposing the second coil (9) to current for this duration.

2. Mpnostable proportional solenoid valve according to claim 1, **characterised in that** the permanent magnet (10) is surrounded annularly by the second coil (9).

3. Monostable proportional solenoid valve according to claim 1 or 2, **characterised in that** the permanent magnet (10) is a fixed annular magnet, **in that** the armature plunger (11) is axially movable within the aperture of the annular magnet of the armature piston (11) and **in that** the annular magnet is arranged on the end face (15) of the armature plunger (11) facing the sealing element (6).

4. Monostable proportional solenoid valve according to claim 3, **characterised in that** the permanent magnet (10) is a disc- or plate-shaped permanent magnet which is fixed within the housing (1) of the solenoid valve and arranged on the end face (16) of the armature plunger (11) remote from the sealing element (6).

5. Monostable proportional solenoid valve according to any of claims 2 to 4, **characterised in that** the second coil (9) is arranged coaxially to the permanent magnet (10).

6. Monostable proportional solenoid valve according to any of claims 1 to 5, **characterised in that** the compression spring (17) is a spiral spring which partially coaxially surrounds the armature plunger (11) and rests, on the one hand, on a support surface connected to the armature plunger (11) and, on the other hand, on an end cover part (13) of the solenoid valve or on a support surface of the valve member (8) remote from this cover part (13).

7. Monostable proportional solenoid valve according to any of claims 1 to 6, **characterised in that** the solenoid valve rests on the outer wall of a T-shaped tube portion comprising a first tube duct (23) merging second tube duct (24) and **in that** the sealing element (6) rests on the valve seat (7) arranged at the transition between the two tube ducts (23, 24).

8. Monostable proportional solenoid valve according to claim 7, **characterised in that** the T-shaped tube portion is provided with a flange (22) on which the solenoid valve rests.

9. Monostable proportional solenoid valve according to any of claims 1 to 8, **characterised in that** a diaphragm (14) is provided on the side of the cover part (13) opposite the armature plunger (11) to form a space (18) between diaphragm (14) and cover part (13), and **in that** this space (18) communicates via a through-passage (19) within the armature plunger (11) with an upstream orifice (21) of the armature plunger (11).

10. Monostable proportional solenoid valve according to any of claims 1 to 9, **characterised in that** the solenoid valve and the T-shaped tube portion form a constructional unit.

11. Monostable proportional solenoid valve according to any of claims 1 to 10, **characterised in that** the armature plunger (11) is constructed in two parts.

12. Monostable proportional solenoid valve according to any of claims 1 to 11, **characterised in that** the sealing element (6) is arranged detachably on the armature plunger (11).

13. Use of the solenoid valve according to any of claims 1 to 12 as proportional valve for closing through-orifices.

14. Use according to claim 13 as solenoid valve for controlling exhaust gas recirculation in internal-combustion engines, in particular of motor vehicles.

## Revendications

1. Electrovanne proportionnelle monostable avec un boîtier (1), dans laquelle une bobine excitatrice (2) est enroulée sur un corps de bobine (3) et un piston d'induit (11) pouvant coulisser le long d'un axe central(X), lorsque la bobine excitatrice (2) est alimentée, dans le sens axial contre l'effet d'un ressort de pression est disposé dans un espace d'induit (4) du corps de bobine (3), piston par lequel un élément d'étanchéité (6) disposé sur la face frontale du piston d'induit (11) peut être comprimé dans un siège de soupape d'une partie de soupape (8), la course de levage du piston d'induit (11) étant fonction de façon linéaire de l'intensité d'alimentation électrique de la bobine excitatrice (2), **caractérisée par** les caractéristiques suivantes :
- un anneau permanent (10) unique pour comprimer l'élément d'étanchéité (6) en position initiale de levage du piston d'induit (11) avec une force prédéfinie contre le siège de soupape,
- une deuxième bobine (9) entourant le piston d'induit (11) pour la neutralisation de l'effet de l'aimant permanent (10) pour la durée de l'alimentation de la bobine excitatrice (2) par l'alimentation de la deuxième bobine (9) pour cette durée.

2. Electrovanne proportionnelle monostable selon la revendication 1, **caractérisée en ce que** l'aimant permanent (10) est entouré par la deuxième bobine (9) avec une forme d'anneau.

3. Electrovanne proportionnelle monostable selon la revendication 1 ou 2, **caractérisée en ce que** l'aimant permanent (10) est un aimant torique fixe, **en ce que** le piston d'induit (11) est mobile dans le sens axial à l'intérieur de l'ouverture de l'aimant torique et **en ce que** l'aimant torique est disposé sur la face frontale (15), tournée vers l'élément d'étanchéité (6), du piston d'induit (11).

4. Electrovanne proportionnelle monostable selon la revendication 3, **caractérisée en ce que** l'élément permanent (10) est un aimant permanent (10) fixe à l'intérieur du boîtier (1) de l'électrovanne, en forme de disque ou de plaque et disposé sur la face frontale (16), opposée à l'élément d'étanchéité (6), du piston d'induit (11).

5. Electrovanne proportionnelle monostable selon l'une quelconque des revendications 2 à 4, **caractérisée en ce que** la deuxième bobine (9) est disposée sur le même axe que l'aimant permanent (10).

6. Electrovanne proportionnelle monostable selon l'une quelconque des revendications 1 à 5, **caractérisée en ce que** le ressort de pression (17) est un ressort spirale entourant en partie de façon coaxiale le piston d'induit (11), lequel ressort s'appuie d'une part sur une surface de soutien reliée au piston d'induit (11) et d'autre part sur une partie de couvercle (13) côté avant de l'électrovanne ou sur une surface de soutien, faisant face à cette partie de couvercle (13), de la partie de soupape (8).

7. Electrovanne proportionnelle monostable selon l'une quelconque des revendications 1 à 6, **caractérisée en ce que** l'électrovanne repose sur la paroi extérieure d'une partie de tube en forme de T, qui présente un deuxième canal tubulaire (24) débouchant dans un premier canal tubulaire (23), et **en ce que** l'élément d'étanchéité (6) repose sur le siège de soupape (7) disposé sur la transition entre les deux canaux tubulaires (23, 24).

8. Electrovanne proportionnelle monostable selon la revendication 7, **caractérisée en ce que** la section de tube en forme de T est pourvue d'une bride (22), sur laquelle repose l'électrovanne.

9. Electrovanne proportionnelle monostable selon l'une quelconque des revendications 1 à 8, **caractérisée en ce qu'**une membrane (14) est prévue sur le côté, faisant face au piston d'induit (11), de la partie de couvercle (13) en formant un espace intermédiaire (18) entre la membrane (14) et la partie de couvercle (13), **en ce que** cet espace intermédiaire (18) est en liaison avec une ouverture avant (21) du piston d'induit (11) au moyen d'un alésage de passage (19) à l'intérieur du piston d'induit (11).

10. Electrovanne proportionnelle monostable selon l'une quelconque des revendications 1 à 9, **caractérisée en ce que** l'électrovanne et la section de tube en forme de T constituent une unité de construction.

11. Electrovanne proportionnelle monostable selon l'une quelconque des revendications 1 à 10, **caractérisée en ce que** le piston d'induit (11) est conçu en deux parties.

12. Electrovanne proportionnelle monostable selon l'une quelconque des revendications 1 à 11, **caractérisée en ce que** l'élément d'étanchéité (6) est disposé de façon amovible sur le piston d'induit (11).

13. Utilisation de l'électrovanne selon l'une quelconque des revendications 1 à 12 comme vanne proportionnelle pour la fermeture d'orifice de passage.

14. Utilisation selon la revendication 13 comme électrovanne pour la commande du recyclage des gaz brûlés sur des machines à combustion interne en particulier de véhicules automobiles.
